# EUROPÄISCHE PATENTSCHRIFT

(11) **EP 2 117 792 B1**
(45) Veröffentlichungstag und Bekanntmachung des Hinweises auf die Patenterteilung: **03.05.2017**
(21) Anmeldenummer: 07847901.1
(22) Anmeldetag: 06.12.2007
(51) Int. Cl.: B27N 3/00, B29C 44/32

(54) **LEICHTBAU-HOLZWERKSTOFFPLATTE UND VERFAHREN ZU DEREN HERSTELLUNG**
LIGHTWEIGHT WOOD-BASED BOARD AND PROCESS FOR PRODUCING IT
PANNEAU LÉGER EN MATÉRIAU DÉRIVÉ DU BOIS ET SON PROCÉDÉ DE FABRICATION

(30) Priorität: 11.12.2006 DE 202006018792 U; 13.03.2007 DE 102007012597
(43) Veröffentlichungstag der Anmeldung: 18.11.2009
(73) Patentinhaber: Universität Hamburg, 20146 Hamburg (DE)
(72) Erfinder: LÜDTKE, Jan, 22089 Hamburg (DE); WELLING, Johannes, 21465 Reinbek (DE); THÖMEN, Heiko, 2533 Evilard (CH); BARBU, Marius Câtâlin, 5431 Kuchl (AT)
(74) Vertreter: Eisenführ Speiser
(86) Internationale Anmeldenummer: PCT/EP2007/063424
(87) Internationale Veröffentlichungsnummer: WO 2008/071618

(56) Entgegenhaltungen:
- EP-A1- 1 561 554
- WO-A-2005/009702
- DE-A1- 2 357 817
- DE-A1- 4 226 988
- DE-A1- 4 327 452
- DE-A1-102004 053 871
- DE-B- 1 228 403
- DE-U1- 20 215 919
- GB-A- 1 124 411
- JP-A- 2002 338 373
- US-A1- 2005 202 253
- US-B1- 6 562 162

## Beschreibung

Die Erfindung betrifft ein Verfahren nach dem Oberbegriff von Anspruch 1.

Weiterhin betrifft die Erfindung eine Holzwerkstoffplatte nach dem Oberbegriff von Anspruch 12.

Holzwerkstoffplatten in Leichtbauweise der eingangs genannten Art nehmen in der verarbeitenden Industrie eine zunehmend bedeutsamere Position ein. Vorteile solcher Leichtbau-Holzwerkstoffplatten sind einerseits eine Einsparung der benötigten Materialien pro Flächeneinheit mit daraus folgender Kostenersparnis, die Möglichkeit, diese Leichtbau-Holzwerkstoffplatten in wirtschaftlichen Herstellungsverfahren zu produzieren und andererseits ihr günstiges Verhältnis von Gewicht zu Festigkeit.

Leichtbau-Holzwerkstoffplatten werden typischerweise in Großserien-Produktionsverfahren hergestellt. Ein hierbei entscheidender Umstand ist die einerseits qualitativ hochwertige und andererseits kosteneffiziente Fertigung der Platten. Grundsätzlich wird bei den heute eingesetzten Fertigungsverfahren zwischen einstufigen und mehrstufigen Verfahren unterschieden. Bei mehrstufigen Verfahren ist der eigentlichen Herstellung der Leichtbau-Holzwerkstoffplatten eine Fertigung von Schichtlagen oder zumindest einiger dieser Schichtlagen vorgeschaltet. So kann eine Leichtbau-Holzwerkstoffplatte typischerweise so hergestellt werden, dass zunächst in einer vorgeschalteten Fertigungsstufe zumindest zwei Holzwerkstoffschichten mit hoher Dichte als Plattenmaterial vorgefertigt werden und nachfolgend diese vorgefertigten Plattenteile, beispielsweise als dünne Span- oder MDF-Platten, einer nachgeschalteten Fertigungsstufe zugeführt werden, indem diese beiden Deckplatten mit einer zwischen ihnen angeordneten Mittellage geringer Dichte zu der Leichtbau-Holzwerkstoffplatte verbunden werden. Die Mittellage geringer Dichte kann dabei während der letzten Fertigungsstufe simultan hergestellt werden oder ebenfalls als vorgefertigtes Plattenmaterial der letzten Fertigungsstufe zugeführt werden.

In der Regel erfolgt die Bereitstellung der vorgefertigten Schichtlagen in Form von Plattenhalbzeug mit bestimmten Flächenabmessungen. Diese Platten werden dann in einer diskontinuierlichen weiteren Fertigungsstufe zu den Leichtbauplatten verarbeitet. Bei geringeren mechanischen Anforderungen können die Schichtlagen mit höherer Dichte auch so vorgefertigt werden, dass sie als Folien-oder Papiermaterial quasi endlos, beispielsweise aus einem aufgewickelten Zustand, zugeführt werden, um auf diese Weise mit vorgefertigten Deck- oder Zwischenlagen eine kontinuierliche Fertigung zu bewerkstelligen.

Ein Nachteil dieser mehrstufigen Fertigungsweise mit vorgefertigten Schichtlagen - ob kontinuierlich oder diskontinuierlich - besteht jedoch darin, dass stets ein zumindest zweistufiger Fertigungsprozess erforderlich ist, der die Gesamtkosten der Herstellung erhöht.

Zur Vermeidung dieser Nachteile ist es aus DE 10 2004 006 385 A1 bekannt, alle zur Herstellung der Leichtbau-Holzwerkstoffplatte erforderlichen Schichtlagen simultan in einem einzigen Fertigungsprozess herzustellen und zu einer Leichtbau-Holzwerkstoffplatte zu verbinden. Bei diesem Verfahren werden aufeinanderfolgend eine Decklage, eine Zwischenlage und eine weitere Decklage aufeinander in Partikelform gestreut, wobei in der Mittelage eine solche Partikelmischung gestreut wird, dass diese durch thermische Aktivierung aufschäumen kann. Die drei gestreuten Lagen werden nachfolgend zwischen zwei Begrenzungsplatten gefahren und die thermische Aktivierung der Mittellage gestartet. Hierdurch schäumt die Mittellage auf und erzeugt einen Pressdruck, der die beiden Decklagen gegen die Begrenzungsplatten drückt, hierdurch verdichtet und folglich zur Ausbildung der Leichtbau-Holzwerkstoffplatte führt.

Durch ein solches Verfahren wird zwar der grundsätzliche Vorteil erzielt, dass eine vorgeschaltete Herstellung von Schichtlagen der Platte nicht mehr erforderlich ist, jedoch tritt der Nachteil auf, dass durch den Schäumdruck die Verpressung der Decklagen nur bis zu einer gewissen Dichte verwirklicht werden kann. Zudem führt der Innendruck im Schaum dazu, dass die Schaumdichte nicht unter ein bestimmtes Maß abgesenkt werden kann. Die Belastbarkeit und Funktionalität von Leichtbau-Holzwerkstoffplatten hängt jedoch in hohem Maße von einer möglichst hohen Verdichtung ihrer Decklagen und einer möglichst niedrigen Dichte der Zwischenlage ab, so dass mit dem kontinuierlichen, einstufigen Fertigungsverfahren gemäß DE 10 2004 006 385 A1 eine Qualitätsverringerung des Endprodukts einhergeht.

Aus EP 1561554 A1 ist eine Holzwerkstoffplatte und ein verfahren zur Herstellung einer Werkstoffplatte bekannt, bei der zwischen zwei Holzwerkstoffschichten eine Schicht aus einem aufgeschäumten Kunststoff eingebracht ist. Bei diesem vorbekannten Verfahren ist gemäß einer Alternative vorgesehen, dass zunächst eine erste Schicht eines Holzwerkstoffes aufgebracht wird und auf diesen eine Schicht aus Kunststoff bzw. Kunststoffgranulat aufgestreut wird. Anschließend werden beide Schichten von einer zweiten Holzwerkstoffschicht überdeckt, bevor der Kunststoff durch Zufuhr thermischer Energie aufgeschäumt wird. Die Holzwerkstoffschicht kann dabei im Falle von Spänen oder Fasern aufgestreut oder aufgeschüttet werden.

Es hat sich gezeigt, dass das für die Erfindung erforderliche schäumbare Material oftmals prozesstechnisch schwierig zu handhaben ist, sei es, dass seine Dosierung nur mit aufwendigen Maßnahmen erzielbar ist oder sei es, dass aufgrund von Staubentwicklung und Gesundheitsgefährdung besondere Sicherheitsmaßnahmen zu treffen sind.

Der Erfindung liegt die Aufgabe zugrunde, ein Verfahren bereitzustellen, welches eine einerseits kosteneffiziente Fertigung von Holzwerkstoffplatten in Leichtbauweise ermöglicht und dabei eine bessere Qualität als bekannte, wirtschaftliche Verfahren erzielen kann. Weiterhin hat sich die Erfindung zum Ziel gesetzt, eine Holzwerkstoffplatte in Leichtbauweise bereitzustellen, die kostengünstig hergestellt werden kann und qualitativ hochwertiger ist als bekannte, kostengünstig herstellbare Holzwerkstoffplatten in Leichtbauweise.

Die Aufgabe wird gemäß eines ersten Aspekts der Erfindung mit einem Verfahren gemäß Anspruch 1 gelöst.

Die Erfindung wird im Folgenden unter Bezugnahme auf eine dreilagige Leichtbau-Holzwerkstoffplatte beschrieben, welche zwei Decklagen und eine zwischen diesen Decklagen angeordnete, geschäumte Zwischenlage aufweist. Es ist jedoch zu verstehen, dass mit dem erfindungsgemäßen Verfahrensprinzip bzw. der erfindungsgemäßen Vorrichtung Leichtbau-Holzwerkstoffplatten mit einer anderen Anzahl an Schichtlagen ausgebildet werden können. So sind beispielsweise fünflagige Leichtbau-Holzwerkstoffplatten ausführbar, bei denen die Zwischenschicht des dreilagigen Plattenaufbaus durch eine hochverdichtete Mittellage in zwei geschäumte Zwischenschichten geteilt wird und in gleicher Weise sind Plattenaufbauten mit sieben, neun oder mehr Schichten realisierbar. In gleicher Weise sind mit dem erfindungsgemäßen Verfahren und der erfindungsgemäßen Vorrichtung auch Leichtbau-Holzwerkstoffplatten realisierbar, welche lediglich eine Decklage und eine geschäumte Schicht aufweisen, beispielsweise indem ein dreilagiger Schichtaufbau nachträglich horizontal in ihrer Zwischenschicht durchtrennt wird. In der Nomenklatur dieser Patentanmeldung und der Ansprüche wird dabei der Begriff Zwischenschicht für jede geschäumte Schicht verwendet und der Begriff Decklage sinngemäß für jede hochverdichtete Schicht verwendet, auch wenn die Zwischenschicht geometrisch nicht tatsächlich zwischen zwei Schichten zu liegen kommt oder die Decklage geometrisch nicht tatsächlich als Außenlage zu liegen kommt.

Das erfindungsgemäße Verfahren ermöglicht es, alle Lagen der mehrschichtigen Platte in einer entsprechenden Schichtung in einem einstufigen Verfahren bereitzustellen und zu der Holzwerkstoffplatte zu verbinden. Hierdurch wird ermöglicht, dass die Leichtbau-Holzwerkstoffplatte in einem kostengünstigen Herstellungsprozess hergestellt wird und folglich die daraus erwachsenden wirtschaftlichen Vorteile erzielt werden. Entgegen dem bekannten Verfahren wird bei dem erfindungsgemäßen Herstellungsverfahren jedoch der zur Verdichtung der Decklagen und gegebenenfalls vorhandener hochdichter Zwischenlagen erforderliche Pressdruck nicht im Wesentlichen durch einen Schäumdruck der aufschäumenden leichten Zwischenlage(n) erzeugt. Stattdessen wird gemäß des erfindungsgemäßen Verfahrens die Verdichtung der Decklagen und gegebenenfalls herzustellender, hochdichter Zwischenlagen zu Beginn durch eine Verpressung mittels eines von außen auf die Schichtlagen aufgebrachten Pressdrucks erzeugt. Zumindest zu Beginn des Verdichtens der oberen und unteren Decklage findet kein Aufschäumen der Zwischenlage statt, d.h. zu Beginn des Verdichtungsvorgangs ist für das erfindungsgemäße Herstellungsverfahren kein Schäumdruck erforderlich, sondern die Presskraft wird durch eine Zustellbewegung von zumindest einer von oberhalb und unterhalb der zu verdichtenden Lagen angeordneten Pressplatten erzielt oder durch eine Zufuhrbewegung der zu verdichtenden Lagen in einen sich verengenden Spalt zwischen solchen Pressplatten.

Mit dem erfindungsgemäßen Verfahren wird somit ermöglicht, die hochdichten Schichtlagen der Leichtbau-Holzwerkstoffplatte mit einem wesentlich höheren Pressdruck zu verdichten als dies mit bekannten Verfahren möglich ist, bei denen als Pressdruck der Schäumdruck genutzt wird. Die Schichtlagen zwischen den hochdicht zu verpressenden Schichtlagen können dabei als Trennlagen dienen, um eine Verbindung der hochzuverdichtenden Decklagen, und gegebenenfalls Zwischenlagen, zu verhindern.

Die Erfinder haben festgestellt, dass mit dem erfindungsgemäßen Verfahren eine höhere Dichte in den hochzuverdichtenden Schichtlagen erzielt werden kann als mit den bisher bekannten einstufigen Herstellungsverfahren. So zeichnen sich Leichtbau-Holzwerkstoffplatten, welche mit dem erfindungsgemäßen Verfahren hergestellt worden sind, dadurch aus, dass sie hochverdichtete Decklagen und gegebenenfalls hochverdichtete Zwischenlagen mit einer Dichte größer als 500kg/m³ ATRO (absolut trocken) aufweisen und insbesondere Dichten von mehr als 650kg/m³ ATRO erzielt werden können. Des Weiteren können mit dem erfindungsgemäßen Verfahren Leichtbauplatten hergestellt werden, deren hochdichte Schichtlagen eine Dichte von 5/3 oder mehr der Dichte der niedrigdichten Schichtlagen haben. Solche hochverdichteten Lagen und Dichteverhältnisse waren zur Produktion von Holzwerkstoffplatten in Sandwichkonstruktion mit einer geschäumten Zwischenlage bisher nur in zwei- oder mehrstufigen Herstellungsprozessen erzielbar. Holzwerkstoffplatten aus solchen zwei- oder mehrstufigen Prozessen zeichnen sich jedoch typischerweise dadurch aus, dass die Grenze zwischen hochdichten und niedrigdichten Schichtlagen als scharfe und ebene Trennlinie verläuft. Demgegenüber kann mit dem erfindungsgemäßen Verfahren eine Holzwerkstoffplatte hergestellt werden, bei der die Grenzfläche zwischen hochdichten Decklagen und den geringverdichteten Zwischenlagen uneben verläuft, insbesondere mit einer Welligkeit, die höher ist als die der Außenflächen der Decklagen, wodurch eine günstige mechanische Verklammerung in den Grenzflächen erzielt wird. Durch diese Effekte können die Leichtbau-Holzwerkstoffplatten, welche mit dem erfindungsgemäßen Verfahren hergestellt werden, neben den Kostenvorteilen auch entscheidende Vorteile hinsichtlich ihrer mechanischen Belastbarkeit gegenüber den mit bislang bekannten Herstellungsverfahren hergestellten Leichtbau-Holzwerkstoffplatten aufweisen, die weder von Holzwerkstoffplatten aus einstufigen Herstellungsverfahren noch mit solchen aus zwei- oder mehrstufigen Herstellungsverfahren erreichbar sind.

Erfindungsgemäß werden die obere und untere Decklage vor dem Aufschäumen der Zwischenlage verdichtet. Bei der Erfindung findet die gesamte Verdichtung der oberen und unteren Decklage und gegebenenfalls weiterer, hochzuverdichtender Zwischenlagen, statt, bevor die niedrigverdichteten Zwischenlagen aufgeschäumt werden. Das Verfahren kann insbesondere so ablaufen, dass die Lagen zunächst einer mechanischen Presse zugeführt werden und kontinuierlich oder diskontinuierlich durch Aufbringen eines Pressdrucks von außen auf die Lagen verdichtet werden, wobei die später aufzuschäumenden Zwischenlagen als Trennschicht wirken können und nach dieser Verdichtung die Aufschäumung der Zwischenlagen stattfindet. Hierbei kann wiederum durch Zustellung von zumindest einer Pressplatte in Dickenrichtung oder Zuführung in einen sich verengenden Spalt zwischen zwei Pressplatten die Presskraft erzeugt werden.

Gemäß einer ersten bevorzugten Ausführungsform beinhaltet der Schäumprozess einen Expansionsvorgang. Hierdurch kann die geringe Dichte der leichten Zwischenlagen in besonders effizienter Weise erzielt werden. Der Schäumprozess kann dabei insbesondere durch thermische Aktivierung eines Treibmittels mit nachfolgender physikalischer (Phasenwechsel) oder chemischer Reaktion des Treibmittels erzielt werden oder aber durch eine zeitverzögerte Reaktion von zwei oder mehr Komponenten nach deren Zusammenmischung bei Bereitstellung der Zwischenlage.

Erfindungsgemäß werden die oberen und unteren Decklagen durch Streuen eines partikelförmigen Ausgangsmaterials bereitgestellt und durch Aufbringen eines Pressdrucks zwischen zwei oberhalb und unterhalb des gestreuten Materials angeordneten Druckplatten verdichtet. So wird einerseits eine effiziente und für eine Vielzahl von Schichtmaterialien nutzbare Bereitstellung der einzelnen Decklagen erzielt. Des Weiteren und unabhängig von der Art der Bereitstellung der Decklagen wird in wirksamer Weise ein hoher Pressdruck erzielt, indem die Druckplatten entweder mit einer entsprechenden Presskraft von außen beaufschlagt werden und hierdurch aufeinander zu bewegt werden oder aber die Position der Druckplatten mit einer entsprechenden Press- bzw. Haltekraft während des Pressvorgangs fixiert wird und die zu verdichtenden Schichtlagen zwischen die Druckplatten eingeführt werden und durch eine in Zuführrichtung sich verringernden keilförmigen Spalthöhenverlauf zwischen den Druckplatten verdichtet werden.

Der partikelförmige Auftrag ist derzeit eine weit verbreitete Technologie zur Herstellung von Leichtbau-Holzwerkstoffplatten. Grundsätzlich eignet sich das erfindungsgemäße Verfahren jedoch auch für andere Auftragsarten, beispielsweise flüssige Auftragsarten, in denen ein flüssiges Material als Film, in Tropfenform oder in anderer Weise vorpartitionierter Form aufgetragen wird, beispielsweise in Form von regelmäßig oder unregelmäßig angeordneten Fäden.

Es ist weiterhin bevorzugt, wenn die Zwischenschicht aus einem durch thermische Aktivierung aufschäumbaren Material besteht und durch thermische Aktivierung aufgeschäumt wird. Durch thermische Aktivierung kann der Aufschäumvorgang der Zwischenschicht prozessintern gut gesteuert bzw. gestartet werden. Insbesondere kann hierbei ein um einen bestimmten Zeitraum verzögerter Start des Aufschäumprozesses verwirklicht werden, beispielsweise durch die Verzögerung bei der Wärmedurchleitung und einem physikalischen Aufschäumvorgang durch Phasenumwandlung eines festen oder flüssigen Materials in die gasförmige Phase oder einen verzögert ablaufenden, durch die Wärmeeinbringung aktivierten chemischen Prozess.

Dabei ist es besonders bevorzugt, wenn die für die thermische Aktivierung der Zwischenschicht benötigte Wärme während des Verpressens der oberen und unteren Decklage zugeführt wird. Auf diese Weise kann eine Verzögerung des Aufschäumvorgangs nach der thermischen Aktivierung vorteilhaft dazu genutzt werden, die Verpressung vor dem Aufschäumvorgang zu beginnen oder zu vollenden.

Dabei ist es insbesondere bevorzugt, dass die Wärme mittels beheizter Pressplatten eingebracht wird. Durch den engen Kontakt der Pressplatten mit dem geschichteten Material kann über die Pressplatten besonders effizient Wärme in das Material eingebracht werden. Dabei kann die Wärme einerseits während des Pressvorgangs eingebracht werden und durch entsprechend verzögerte Auslegung des Schäumvorgangs nach Beginn oder Ende des Verdichtungsvorgangs zur Aufschäumung führen oder es kann erst nach Vollendung des Verdichtungsvorgangs bei kraftlos oder nahezu kraftlos aufliegenden Druckplatten eine Beheizung und folglich Temperatureinbringung über die Druckplatten erfolgen.

Weiterhin ist es bevorzugt, dass die Verdichtung der oberen und unteren Decklage erfolgt, indem sie zwischen zwei Druckplatten angeordnet werden und sich der Abstand der beiden Druckplatten voneinander mit Fortschreiten des Verarbeitungsprozesses verringert. Dabei kann die Verringerung des Abstands der beiden Druckplatten einerseits dadurch erfolgen, dass die Druckplatten parallel zueinander liegen und aufeinander zu bewegt werden, wodurch eine diskontinuierliche Verpressung erzielt wird.

Andererseits ist es insbesondere zur Erzielung eines kontinuierlichen Verpressungsvorgangs bevorzugt, wenn die obere und untere Decklage zwischen zwei feststehende Druckplatten eingeführt werden und sich der Abstand der beiden Druckplatten voneinander verringert, indem sich der Abstand zwischen den beiden Druckplatten in Vorschubrichtung der oberen und unteren Decklage verringert. Dabei sind die Druckplatten so ausgerichtet, dass sie einen keilförmigen Spalt zwischen sich ausbilden, in den das zu verpressende Material hineingefördert wird und durch den Fördervorgang in den Bereich des sich verengenden Abstands zwischen den Druckplatten bewegt wird, wodurch eine kontinuierliche Verpressung zwischen feststehenden Druckplatten erzielt wird.

Gemäß einer weiteren, besonders bevorzugten Ausführungsform der Erfindung werden die obere und untere Decklage durch Aufbringen einer Schicht von partikelförmigem Ausgangsmaterial und nachfolgendes Auftrennen dieser Schicht gebildet und wird die Zwischenlage durch Einbringen von partikelförmigem Ausgangsmaterial in den durch das Auftrennen erzeugten Spalt gebildet. Bei dieser Ausgestaltung des erfindungsgemäßen Verfahrens wird somit beim Aufbringvorgang selbst noch keine Differenzierung zwischen oberer und unterer Decklage und gegebenenfalls vorhandenen hochzuverdichtenden Zwischenlagen getroffen, sondern diese beiden oder mehreren hochzuverdichtenden Lagen werden als eine zusammenhängende, gestreute Schicht bereitgestellt. Die solcherart aufgestreute Schicht kann nachfolgend einfach oder mehrfach in einer parallel zur Schichtebene liegenden Ebene aufgetrennt werden und in den so erzeugten Spalt/die so erzeugten Spalte ein anderes Material eingebracht werden, welches später die gering zu verdichtenden Schichtlagen der Leichtbau-Holzwerkstoffplatten ausbilden.

Als abgewandelte Variante dieser Fortbildung kann das erfindungsgemäße Verfahren fortgebildet werden, indem die obere und untere Zwischenlage durch Aufbringen eines partikelförmigen Ausgangsmaterials auf eine Unterlage gebildet werden und das aufgebrachte Material auf der Unterlage zwischen zwei Pressplatten bewegt, zwischen diesen verpresst und nachfolgend aufgetrennt wird. Bei diesem Verfahrensablauf werden somit die hochzuverdichtenden Schichten sowohl als zusammenhängende Schicht gemeinsam bereitgestellt als auch als solche gemeinsam verpresst, wodurch in einem Zwischenstadium des Fertigungsvorgangs zunächst eine einzige hochverdichtete Schichtlage erzeugt wird, die zu einem späteren Zeitpunkt in einer Ebene in Längsrichtung der Schicht aufzutrennen ist, um die geringzuverdichtende Zwischenlage einzubringen.

Insbesondere kann dieses Einbringen der niedrigzuverdichtenden Zwischenlage erzielt werden, indem das Auftrennen der Schicht in die obere und untere Decklage mittels eines Keils oder eines horizontal laufenden Bandsägeblatts, zu dem die verpresste Schichtlage konstant relativ bewegt wird, erfolgt und hinter diesem Keil/Sägeblatt das Einbringen der Zwischenlage stattfindet.

Das Einbringen der Zwischenlage kann dabei insbesondere durch Einstreuen, Einblasen oder Eindüsen des Zwischenlagenmaterials erfolgen, beispielsweise in Partikelform oder in flüssiger Form, wie zuvor bereits für das Decklagenmaterial beschrieben.

Weiterhin ist es bevorzugt, wenn die Zwischenlage als Gemisch eines Trägermaterials und eines schäumbaren Materials bereitgestellt wird. Durch ein Gemisch eines Trägermaterials und eines schäumbaren Materials kann eine besonders vorteilhafte Zusammensetzung der Zwischenschicht erreicht werden, die einerseits den Gewichtsanforderungen und andererseits den Anforderungen an die mechanische Stabilität und Handhabbarkeit genügt.

Gemäß einer weiteren Fortbildung wird die Zwischenlage als Gemisch eines Trägermaterials und eines schäumbaren Materials bereitgestellt.

Mit dieser Fortbildung können Nachteile bezüglich der Handhabung des Zwischenlagenmaterials überwunden werden, indem zusätzlich zum schäumbaren Material ein Trägermaterial in gemischter Form als Zwischenlagenmaterial eingebracht wird. Hierdurch kann sowohl die Handhabbarkeit des Zwischenlagenmaterials verbessert werden als auch die oftmals problematischen gesundheitsschädlichen Wirkungen durch Staubentwicklung verringert werden.

Dabei ist es insbesondere bevorzugt, wenn das Trägermaterial in Form von Partikeln vorliegt, an denen das schäumbare Material befestigt ist oder die mit dem schäumbaren Material getränkt sind. Durch diese Ausgestaltung einer Verbindung zwischen den Bestandteilen des Trägermaterials und des schäumbaren Materials insbesondere beispielsweise durch Anhaften des schäumbaren Materials an den Partikeln des Trägermaterials, zu Mischpartikeln wird eine besonders günstige Konsistenz für die Verarbeitung erzielt.

Alternativ hierzu kann es bevorzugt sein, dass das Trägermaterial in Form einer Vlieslage vorliegt, an und/oder in der das schäumbare Material befestigt ist oder das mit dem schäumbaren Material getränkt ist. Mit dieser Fortbildung wird eine sich von der Partikelform unterscheidende Bereitstellungsform des Zwischenlagenmaterials ermöglicht, die in gleicher Weise in den kontinuierlichen Fertigungsvorgang des erfindungsgemäßen Verfahrens eingebunden werden kann und hierbei eine für die Prozesskontrolle und Arbeitssicherheit günstige Handhabbarkeit bereitstellt.

Das der Erfindung zugrunde liegende Problem wird weiterhin durch eine Holzwerkstoffplatte gemäß Anspruch 12 gelöst.

Gemäß einer Fortbildung der Erfindung ist in der Zwischenlage ein von einem geschäumten Material umgebenes Trägermaterial enthalten. Mit dieser Ausgestaltung wird eine besonders gut den mechanischen Anforderungen angepasste Zwischenlage in der Holzwerkstoffplatte erzielt, welche durch die Mischung von Schaummaterial und Trägermaterial einen Verbundwerkstoff darstellt.

Gemäß einer weiteren bevorzugten Ausführungsform der beiden vorgenannten Holzwerkstoffplatten sind die Decklagen mit einem Pressdruck verdichtet, welcher höher ist als der durch das Aufschäumen der Zwischenlage erzeugte Druck. Durch die solcherart erzielte hohe Verdichtung der beiden Decklagen kann die mechanische Beanspruchbarkeit der Holzwerkstoffplatte gegenüber bekannten Holzwerkstoffplatten aus einstufigen Herstellungsverfahren maßgeblich erhöht werden.

Weiterhin ist es bevorzugt, wenn die Decklagen auf der zur Zwischenlage weisenden Seite eine höhere Welligkeit aufweisen als auf der von der Zwischenlage wegweisenden Seite, insbesondere eine dreimal höhere Welligkeit. Durch die so erzielte höhere Welligkeit, die sich als Wellenform, insbesondere aber als unregelmäßige Ebene zwischen Decklage und Zwischenlage darstellen kann, wird einerseits eine mechanische Verklammerung zwischen Deck- und Zwischenlage erzielt und andererseits ein mikroskopisch gradueller Übergang bereitgestellt, welcher die Lastübertragung zwischen der Decklage und der Zwischenlage verbessert. Diese Ausführungsform ist insbesondere so zu verstehen, dass die von der Zwischenlage wegweisende Seite der Decklage die Außenflächen der Holzwerkstoffplatte darstellen, welche typischerweise eine glatte Oberfläche aufweist und die zur Zwischenlage weisende Seite die Übergangsebene innerhalb der Holzwerkstoffplatte darstellt.

Erfindungsgemäß haben die Decklagen eine Dichte größer als 500 kg/m³ ATRO (absolut trocken), insbesondere größer 650 kg/m³ ATRO. Es hat sich gezeigt, dass durch diese Dichten eine hohe Festigkeit der gesamten Holzwerkstoffplatte erreicht wird.

Weiterhin ist es bevorzugt, wenn das Verhältnis von Dichte der Decklage zu Zwischenlage größer 5/3 ist, vorzugsweise größer 5/1,5. Das Verhältnis der Dichten zwischen Decklage und Zwischenschicht ist insbesondere ausschlaggebend für das Verhältnis der Belastbarkeit der Holzwerkstoffplatte zu ihrem Gesamtgewicht. Grundsätzlich ist es innerhalb eines weiten Verhältnisbereichs erstrebenswert, eine in Relation zur Zwischenlage möglichst hohe Dichte der Decklagen in Relation zur Dichte der Zwischenlage zu erzielen, um insgesamt eine hohe Festigkeit und ein niedriges Gewicht der Holzwerkstoffplatte zu erreichen.

Die erfindungsgemäße Holzwerkstoffplatte wird insbesondere bevorzugt durch das zuvor erläuterte erfindungsgemäße einstufige Herstellungsverfahren produziert und kann in diesem Fall dadurch, dass auf eine Nutzung des Schäumdrucks zur Verdichtung der Decklage verzichtet wird, eine besonders geringe Schaumdichte bei gleichzeitig besonders hoher Decklagendichte aufweisen.

Gemäß einer weiteren bevorzugten Ausführungsform ist zwischen der Decklage und der Zwischenlage ein mikroskopisch und vorzugsweise makroskopisch gradueller Dichte-Übergang ausgebildet. Ein solcher mikroskopisch gradueller Übergang kann beispielsweise durch Bereitstellen der einzelnen Schichtlagen durch Streuung von Partikelmaterial erzielt werden, wenn in den Übergangsbereichen zwischen den einzelnen Schichtlagenstreuungen eine gezielte Vermengung der unterschiedlichen Partikelmischungen für die einzelnen Schichtlagen erreicht wird oder diese Übergangsbereiche durch gezieltes Streuen von Partikelmischungen, die aus den Partikeln der einzelnen Schichtlagen zusammengemischt sind, als sich graduell verändernde Streulagen ausgebildet werden. Durch graduelle Dichteübergänge können Spannungsspitzen, insbesondere Scherspannungsspitzen, im Übergangsbereich zwischen Deck- und Zwischenlage abgebaut werden und die zu übertragende Scherkraft über ein größeres Materialvolumen verteilt werden, wodurch das Spannungsniveau insgesamt abgesenkt werden kann und folglich die mechanische Belastbarkeit der Holzwerkstoffplatte erhöht werden kann.

Weiterhin ist es bevorzugt, dass die Decklagen aus hochverdichtetem Material bestehen und die Zwischenlage aus einem unter thermischem Einfluss aufgeschäumten Material besteht. Durch diese Ausgestaltung wird ermöglicht, eine Reihe von Materialien, welche für Deck- und Zwischenlagen vorteilhaft sind, in der erfindungsgemäßen Holzwerkstoffplatte einzusetzen.

Schließlich ist ein weiterer Aspekt der Erfindung eine Vorrichtung nach den Ansprüchen 19 bis 25. Die beanspruchte Vorrichtung eignet sich insbesondere dazu, eine Leichtbau-Holzwerkstoffplatte in der zuvor beschriebenen Weise herzustellen. Dabei kann insbesondere das zuvor beschriebene Verfahren eingesetzt werden.

Bezüglich der in Anspruch 19 aufgeführten Einbringvorrichtungen ist zu verstehen, dass diese als Streuvorrichtung, Einblasvorrichtung, Eindüsungsvorrichtung oder dergleichen ausgebildet sein können, um ein festes, partikelförmiges, flüssiges, flüssiges aushärtendes Material in Partikelform, Fadenform der dergleichen einzubringen. Unter Partikelform soll in diesem Zusammenhang jegliche Ausgestaltung des Materials verstanden werden, welche nach dem Aufbringen einen mit Hohlräumen versehenen Schichtlagenaufbau erzeugt und somit einer nachträglichen Verdichtung zugänglich ist. In Bezug auf das Decklagenmaterial ist insbesondere zu verstehen, dass bereits beim Aufbringvorgang eine möglichst dichte Schichtstruktur angestrebt wird und folglich die Struktur des eingebrachten Decklagenmaterials bereits möglichst dicht sein sollte.

In Bezug auf die in den Ansprüchen 21 und 22 beanspruchte Trennvorrichtung ist insbesondere zu verstehen, dass diese durch einen Spaltkeil oder durch ein horizontal laufendes Sägeblatt ausgeführt sein kann.

Eine besonders bevorzugte Ausführungsform wird anhand der anhängenden Figuren beschrieben. Es zeigen:
- Figur 1:: eine schematische Darstellung des Ablaufs des erfindungsgemäßen Verfahrens gemäß einer ersten Ausführungsform,
- Figur 2:: eine schematische Darstellung des Ablaufs des erfindungsgemäßen Verfahrens gemäß einer zweiten Ausführungsform,
- Figur 3:: eine schematische Darstellung des Ablaufs des erfindungsgemäßen Verfahrens gemäß einer dritten Ausführungsform,
- Figur 4:: eine schematische Darstellung einer kontinuierlichen Pressanordnung, und
- Figur 5:: einen schematischen Querschnitt durch eine mit dem erfindungsgemäßen Verfahren hergestellten Leichtbauplatte.

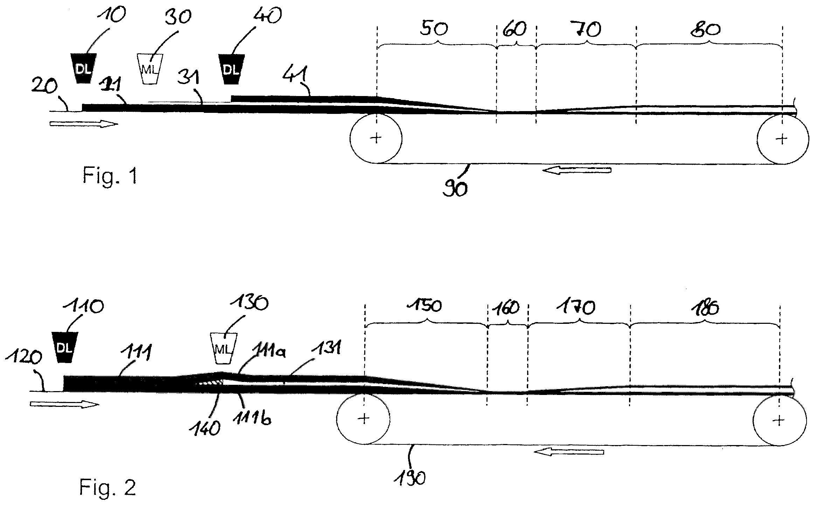

Bezug nehmend zunächst auf Figur 1 wird bei einer ersten Ausführungsform des erfindungsgemäßen Verfahrens mittels einer Aufstreuvorrichtung 10 ein Decklagenmaterial 11 auf ein fortlaufendes Trägerband 20 aufgestreut.

In Förderrichtung des Trägerbands 20 hinter der Aufstreuvorrichtung für die erste Decklage 10 ist eine Aufstreuvorrichtung 30 angeordnet, welche auf das bereits auf dem Trägerband 10 aufgestreute Decklagenmaterial 11 ein Zwischenschichtmaterial 31 aufstreut.

In Förderrichtung des Trägerbands 20 hinter der Aufstreuvorrichtung 30 für das Zwischenschichtmaterial 31 ist eine weitere Aufstreuvorrichtung 40 angeordnet, welche auf das bereits aufgestreute Zwischenschichtmaterial 31 ein Decklagenmaterial 41 aufstreut.

Der solcherart hergestellte Streulagenverbund aus unterer Decklage 11, Zwischenlage 31 und oberer Decklage 41 wird nachfolgend einer Verdichtungsstation 50 zugeführt. In der Verdichtungsstation 50 werden die drei gestreuten Schichtlagen verdichtet, indem sie zwischen ein oder mehrere hintereinander angeordnete Pressplattenpaare mittels eines Förderbands 90 eingefahren werden, wobei die Pressplattenpaare in Förderrichtung des Förderbands 90 zwischen sich einen sich in Förderrichtung des Förderbands 90 verringernden Spalte belassen, so dass die gestreuten Schichtlagen in Förderrichtung verdichtet werden.

Unter Plattenpaaren ist in diesem Zusammenhang zu verstehen, dass die ober-und unterseitigen Platten paarweise einander zugeordnet sein können. Es sind jedoch auch andere Konfigurationen hierunter zu verstehen, beispielsweise Konfigurationen, in denen zwei auf einer Seite angeordnete Pressplatten einer auf der gegenüberliegenden Seite angeordneten Pressplatten zugeordnet sind oder Plattenanordnungen, in denen sich der Erstreckungsbereich von oben- und untenliegenden Pressplatten in versetzter Anordnung überschneidet, so dass keine unmittelbare Zuordnung einer oberen Pressplatte zu einer entsprechend direkt gegenüberliegenden unteren Pressplatte besteht.

Durch die Verpressung können gestreute Fasermatten in ihrer Dicke auf 2-5% der ursprünglichen Dicke verringert werden. Diese Dickenverlängerung kann durch eine Vor-Verpressung erfolgen, wonach von der nach Vorverpressung vorliegenden Dicke auf eine Enddicke von 5-10% dieser nach Vorverdichtung erzielten Dicke verpresst wird. Bei Verpressung von gestreuten Spanmatten wird häufig in ähnlicher Weise mit Vorverpressung und Endverpressung vorgegangen und dann in der Endverpressung eine Dicke von 20-50% der nach Vorverpressung erzielten Dicke erreicht.

Die solcherart in ihrer Dicke verringerte Schichtung wird in einer ersten Härtungszone 60 zwischen zwei parallel zueinander stehenden Pressplatten, die zwischen sich einen Spalt annähernd konstanter Dicke belassen, ausgehärtet und fixiert, indem Wärme zugeführt wird. Durch diesen Vorgang in der Härtungszone werden einerseits die Decklagen gehärtet und fixiert. Zugleich wird in der Zwischenlage ein durch thermische Aktivierung ausgelöster Aufschäumvorgang gestartet.

Dieser Aufschäumvorgang bewirkt in einer in Förderrichtung des Förderbands 90 folgenden Expansionszone 70 eine Expansion der Zwischenlage und eine hieraus folgende Erhöhung der Dicke des Plattenverbunds.

Der solcherart erhaltene, aufgeschäumte Schichtlagenverbund wird in einer der Expansionszone 70 in Förderrichtung des Förderbands 90 folgenden zweiten Härtungszone 80 durch Abfuhr der Wärme aus dem Schichtverbund ausgehärtet und in seiner Form fixiert, indem er zwischen zwei wärmeableitenden, parallelen Pressplatten hindurchgefördert wird.

Am Ausgang der zweiten Härtungszone 80 kann das solcherart hergestellte Dreischicht-Leichtbauplattenmaterial mit konventioneller Handhabungstechnik weiterverarbeitet, insbesondere zugeschnitten werden.

Figur 2 zeigt eine zweite Ausführungsform des erfindungsgemäßen Verfahrens. In einer Streuvorrichtung 110 wird ein partikelförmiges Decklagenmaterial auf ein Trägerband 120 aufgestreut. Diese gestreute Schicht 111 wird mittels des Trägerbands 120 zu einer Streuvorrichtung 130 gefördert. Die Streuvorrichtung 130 wirkt mit einer Trennvorrichtung 140, wie einem Spaltkeil oder einem horizontal laufenden Sägeband zusammen, welche die gestreute Decklagenschicht 111 in einer horizontalen, parallel zur Förderrichtung des Trägerbands 120 liegenden Ebene aufspaltet und solcherart eine obere, gestreute Decklagenschicht 111a und eine untere, gestreute Decklagenschicht 111 b erzeugt.

In den durch die Trennvorrichtung 140 erzeugten Spalt wird das Zwischenschichtmaterial in Partikelform eingebracht, beispielsweise eingedüst oder eingeblasen und bildet auf diese Weise eine gestreute Zwischenschicht 131 aus.

Der solcherart hergestellte, dreilagige, gestreute Schichtlagenverbund wird zur Weiterverarbeitung einem Förderband 190 zugeführt und hier mittels einer Verdichtungszone 150, einer hierauf folgenden ersten Härtungszone 160, Expansionszone 170 und zweiten Härtungszone 180 in prinzipiell gleicher Weise zu einer mit konventionellen Mitteln weiterverarbeitbaren Leichtbauplatte verdichtet, expandiert und verfestigt wie im vorangegangenen Ausführungsbeispiel gemäß Figur 1.

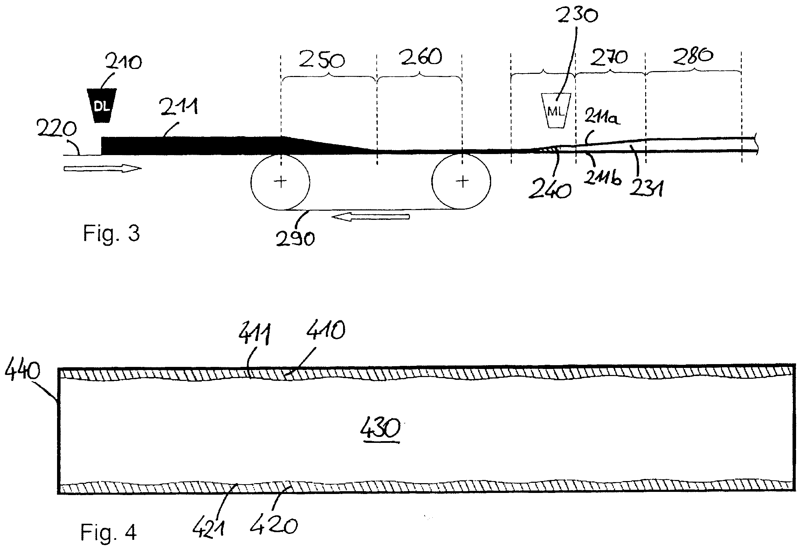

Figur 3 zeigt eine dritte Ausführungsform des erfindungsgemäßen Verfahrens. Wie bei der anhand Figur 2 erläuterten zweiten Ausführungsform wird auch bei der dritten Ausführungsform zunächst mittels einer Aufstreuvorrichtung 210 ein partikelförmiges Decklagenmaterial auf ein Trägerband 220 aufgestreut.

Dieses aufgestreute Decklagenmaterial 211 wird nun jedoch nicht horizontal aufgespalten, sondern unmittelbar mittels eines Förderbands 290 durch eine Komprimierungszone 250 bewegt und hierbei hochverdichtet und in entsprechender Weise in der Dicke reduziert. Diese hochverdichtete, dickenreduzierte Geometrie wird in einer in Förderrichtung nachfolgenden ersten Härtungszone 260 fixiert.

Der ersten Härtungszone 260 in Förderrichtung des verdichteten Decklagenverbundes nachgeordnet ist eine zweite Aufstreuvorrichtung 230. Der Aufstreuvorrichtung 230 ist eine Trennvorrichtung 240 zugeordnet, welche den verdichteten Decklagenverbund 211 in eine obere und eine untere Decklage 211 a, b entlang einer horizontal und parallel zur Förderrichtung liegenden Ebene auftrennt. In den so entstandenen spaltförmigen Hohlraum zwischen den beiden Decklagen 111 a, b wird das Zwischenschichtmaterial hinter der Trennvorrichtung 240 als partikelförmiges Zwischenschichtmaterial eingebracht, beispielsweise eingedüst oder eingeblasen. Der solcherart erzeugte Verbund aus aufgestreuter und verdichteter oberer und unterer Decklage 211 a, b, welche getrennt sind durch das aufgestreute Zwischenlagenmaterial 231, wird einer in Förderrichtung des Schichtlagenverbunds der Trennvorrichtung 240 folgenden Expansionszone 270 zugeführt, in welcher das Zwischenschichtmaterial aktiviert und hierdurch aufgeschäumt wird. Diese Aktivierung erfolgt im dargestellten Ausführungsbeispiel durch Wärmezufuhr thermisch, kann aber auch in anderer Weise erfolgen, beispielsweise durch Zufuhr eines Reaktionsmittels, durch Bestrahlung oder dergleichen. Das Zwischenschichtmaterial erfährt hierbei eine Expansion und der gesamte Schichtverbund wird hierdurch auf eine größere Schichtdicke expandiert.

Die solcherart erzielte Schichtdicke wird in einer nachfolgenden zweiten Härtungszone 280 zwischen zwei parallel zueinander angeordneten, fixierten Pressplatten durch Wärmeabfuhr ausgehärtet und solcherart eine mit konventionellen Mitteln weiterverarbeitbare Leichtbau-Holzwerkstoffplatte erzielt.

Figur 4 zeigt schematisch die Anordnung einer kontinuierlichen Pressvorrichtung. Bei der dargestellten Ausgestaltung wird ein partikelförmiges, aufgestreutes Schichtlagenmaterial 310 auf einer Unterlage 320 horizontal in einer Richtung 330 gefördert. Das gestreute Schichtlagenmaterial wird am Ende der Unterlage 320 von einer oberen Stahlbandlage 340 und einer unteren Stahlbandlage 350 eingefasst. Die obere Stahlbandlage 340 und die untere Stahlbandlage 350 sind vorzugsweise als Endlosstahlbänder ausgeführt.

Die obere und untere Stahlbandlage 340, 350 werden durch zwei auf der dem zwischen ihnen eingefassten, gestreuten Schichtlagenmaterial gegenüberliegenden Seite durch ein oberes und unteres Endlos-Rollenelementband 360, 370 wälzgeführt und solcherart zwischen zwei Pressplatten 380, 390 eingefahren, in welchen sie verpresst werden können.

Wie abgebildet, kann bereits beim Einschnüren des gestreuten Materials zwischen den beiden Stahlbändern 340, 350 und der nachfolgenden Führung entlang der Rollenelementbänder 360, 370 eine Verdichtung des gestreuten Materials erfolgen, die zwischen den Pressplatten, die, abweichend von der dargestellten Ausführungsform, zwischen sich einen in Förderrichtung sich verengenden Spalt ausbilden können, weiter auf das gewünschte Maß hochverdichtet werden.

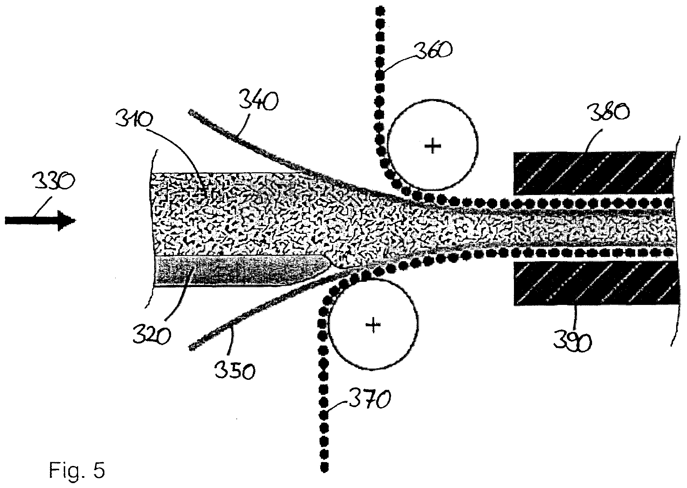

Figur 5 zeigt schließlich den schematischen, nicht maßstabsgetreuen Querschnitt einer Leichtbauplatte, welche mit dem erfindungsgemäßen Verfahren hergestellt ist. Man kann eine obere Decklage 410 und eine untere Decklage 420 erkennen. Die obere und untere Decklage 410, 420 fassen zwischen sich eine Zwischenschicht 430 aus einem geschäumten Holzwerkstoffmaterial mit niedriger Dichte ein. Die Grenzfläche zwischen den beiden Decklagen 410, 420 zu der Zwischenschicht 430, gekennzeichnet durch die Bezugszeichen 411 und 421, ist in einer unregelmäßigen Wellenform ausgebildet, was durch den Herstellungsvorgang gemäß des erfindungsgemäßen Verfahrens hervorgerufen ist.

## Patentansprüche

1. Verfahren zum Herstellen einer Sandwichplatte, mit den Schritten:
a. Bereitstellen einer oberen Decklage (11),
b. Bereitstellen einer unteren Decklage (41),
c. Bereitstellen einer zwischen der oberen und unteren Decklage angeordneten Zwischenlage (31),
d. wobei die oberen und unteren Decklagen durch Streuen eines partikelförmigen Ausgangsmaterials bereitgestellt werden und durch Aufbringen eines Pressdrucks zwischen zwei oberhalb und unterhalb des gestreuten Materials angeordneten Druckplatten verdichtet, werden,
e. Verdichten der oberen und unteren Decklage,
f. Aufschäumen der Zwischenlage,
**dadurch gekennzeichnet, dass** die obere und untere Decklage vor dem Aufschäumen der Zwischenlage mit einem Pressdruck auf eine Dichte von größer als 500 Kg/m³ ATRO verdichtet werden, welcher höher ist als der durch das Aufschäumen der Zwischenlage erzeugte Druck.

2. Verfahren nach einem der vorhergehenden Ansprüche 1,
**dadurch gekennzeichnet, dass** der Schäumprozess einen Expansionsvorgang beinhaltet.

3. Verfahren nach einem der vorhergehenden Ansprüche,
**dadurch gekennzeichnet, dass** die Zwischenlage aus einem durch thermische Aktivierung aufschäumbaren Material besteht und durch thermische Aktivierung aufgeschäumt wird.

4. Verfahren nach einem der vorhergehenden Ansprüche,
**dadurch gekennzeichnet, dass** die für die thermische Aktivierung der Zwischenlage benötigte Wärme während des Verpressens der oberen und unteren Decklage zugeführt, Insbesondere mittels beheizter Druckplatten eingebracht, wird.

5. Verfahren nach einem der vorhergehenden Ansprüche,
**dadurch gekennzeichnet, dass** die Verdichtung der oberen und unteren Decklage erfolgt, indem sie zwischen zwei Druckplatten angeordnet, insbesondere zwischen zwei feststehende Druckplatten eingeführt, werden und sich der Abstand der beiden Druckplatten voneinander mit Fortschreiten des Verarbeitungsprozesses, insbesondere in Vorschubrichtung der oberen und unteren Decklage, verringert.

6. Verfahren nach einem der vorhergehenden Ansprüche,
**dadurch gekennzeichnet, dass** die obere und untere Decklagen durch Aufstreuen einer Schicht von partikelförmigem Ausgangsmaterial und nachfolgendes Aufspalten der einen Schicht gebildet werden und die Zwischenlage durch Einbringen von partikelförmigem Ausgangsmaterial in den durch das Aufspalten erzeugten Spalt gebildet wird.

7. Verfahren nach einem der vorhergehenden Ansprüche,
**dadurch gekennzeichnet, dass** die obere und untere Decklage durch Aufstreuen eines partikelförmigen Ausgangsmaterials auf eine Unterlage und Verpressen des Ausgangsmaterials gebildet werden und das aufgestreute Material auf der Unterlage zwischen zwei Pressplatten bewegt, zwischen diesen verpresst wird und nachfolgend aufgetrennt wird.

8. Verfahren nach Anspruch 7,
**dadurch gekennzeichnet, dass** das Auftrennen der Schicht in die obere und untere Decklage und das Einbringen der Zwischenlage nach dem Verpressen der oberen und unteren Zwischenlage erfolgt.

9. Verfahren nach einem der vorhergehenden Ansprüche 1-8,
**dadurch gekennzeichnet, dass** die Zwischenlage als Gemisch eines Trägermaterials und eines schäumbaren Materials bereitgestellt wird.

10. Verfahren nach Anspruch 9,
**dadurch gekennzeichnet, dass** das Trägermaterial In Form von Partikeln vorliegt, an denen das schäumbare Material befestigt ist.

11. Verfahren nach Anspruch 9,
**dadurch gekennzeichnet, dass** das Trägermaterial in Form einer Vlieslage vorliegt, an und/oder in der das schäumbare Material befestigt oder eingelagert ist.

12. Holzwerkstoffplatte in Sandwichkonstruktion, umfassend:
a. zumindest eine obere Decklage,
b. zumindest eine untere Decklage,
c. zumindest eine zwischen der oberen und unteren Decklage angeordnete geschäumte Zwischenlage, welche eine geringere Dichte als die obere und untere Decklage aufweist und diese verbindet,
d. **dadurch gekennzeichnet, dass** die obere und untere Decklage auf eine Dichte von größer als 500 Kg/m³ ATRO hochverdichtet und hergestellt sind, indem die oberen und unteren Decklagen durch Streuen eines partikelförmigen Ausgangsmaterials bereitgestellt werden und durch Aufbringen eines Pressdrucks zwischen zwei oberhalb und unterhalb des gestreuten Materials angeordneten Druckplatten verdichtet werden.
sind.

13. Holzwerkstoffplatte nach Anspruch 12
**dadurch gekennzeichnet, dass** in der Zwischenlage ein von einem geschäumten Material umgebenes Trägermaterial enthalten ist.

14. Holzwerkstoffplatte nach Anspruch 12 oder 13,
**dadurch gekennzeichnet, dass** die Decklagen mit einem Pressdruck verdichtet sind, welcher höher ist als der durch das Aufschäumen der Zwischenlage erzeugte Druck.

15. Holzwerkstoffplatte nach einem der vorhergehenden Ansprüche 12-14,
**dadurch gekennzeichnet, dass** die Decklagen auf der zur Zwischenlage weisenden Seite eine höhere Welligkeit aufweisen als auf der von der Zwischenlage wegweisenden Seite, insbesondere eine dreimal höhere Welligkeit.

16. Holzwerkstoffplatte nach einem der vorhergehenden Ansprüche 12-15,
**dadurch gekennzeichnet, dass** das Verhältnis von Dichte der Decklage zu Zwischenlage größer 5/3 Ist, vorzugsweise größer 5/1,5.

17. Holzwerkstoffplatte nach einem der vorhergehenden Ansprüche 12-16,
**dadurch gekennzeichnet, dass** zwischen der Decklage und der Zwischenlage ein mikroskopisch gradueller Dichte-Übergang ausgebildet ist.

18. Holzwerkstoffplatte nach einem der vorhergehenden Ansprüche 12-17,
**dadurch gekennzeichnet, dass** die Decklagen und/oder die Zwischenlage aus gestreutem Ausgangsmaterial zusammengesetzt sind.

19. Vorrichtung zur Herstellung einer Leichtbau-Sandwichplatte, umfassend
- eine Fördervorrichtung mit einer oberen Auflagefläche, die sich in einer Förderrichtung bewegt,
- eine erste Streuvorrichtung zum Streuen eines partikelförmigen Decklagenmaterials für eine obere Decklage und eine untere Decklage ,
- eine zweite Einbringvorrichtung zum Einbringen eines Zwischenlagenmaterials, insbesondere eine zweite Streuvorrichtung zum Streuen eines partikelförmigen Zwischenlagenmaterials,
- eine Verdichtungsvorrichtung zum Verdichten des Decklagenmaterials auf eine Dichte von größer als 500 Kg/m³ ATRO, und
- eine Aufschäumvorrichtung zum Aufschäumen des Zwischenlagenmaterials zu einer zwischen der oberen und der unteren Decklage angeordneten geschäumten Zwischenlage.
**dadurch gekennzeichnet, dass** die Aufschäumvorrichtung in Förderrichtung hinter der Verdichtungsvorrichtung angeordnet ist.

20. Vorrichtung nach Anspruch 19,
**dadurch gekennzeichnet, dass** die erste Streuvorrichtung eine erste Streuvorrichtungseinheit umfasst, welche eine Decklagenschicht auf die Auflagefläche der Fördervorrichtung streut und in Förderrichtung vor der zweiten Einbringvorrichtung angeordnet ist und eine zweite Streuvorrichtungseinheit umfasst, welche in Förderrichtung hinter der zweiten Einbringvorrichtung für die Zwischenschicht angeordnet ist und ein partikelförmiges Decklagenmaterial auf die aufgestreute Zwischenschicht aufstreut.

21. Vorrichtung nach Anspruch 19,
**dadurch gekennzeichnet, dass** die zweite Einbringvorrichtung eine Trennvorrichtung umfasst, die in Förderrichtung zwischen der ersten Streuvorrichtung und der Verdichtungsvorrichtung angeordnet ist und die ausgebildet ist, um die Decklagenschicht in einer horizontalen und parallel zur Förderrichtung der Fördervorrichtung liegenden Ebene aufzutrennen,
wobei die zweite Einbringvorrichtung ausgebildet ist, um das Zwischenschichtmaterial in den durch die Trennvorrichtung erzeugten Spalt zwischen die durch die Auftrennung erzeugten Teile des Decklagenmaterials einzubringen.

22. Vorrichtung nach Anspruch 19
**dadurch gekennzeichnet, dass** die zweite Einbringvorrichtung eine Trennvorrichtung umfasst, welche in Förderrichtung zwischen der Verdichtungsvorrichtung und der Aufschäumvorrichtung angeordnet ist und die verpresste Decklagenschicht in einer horizontalen, parallel zur Förderrichtung liegenden Ebene auftrennt, wobei die zweite Einbringvorrichtung ausgebildet ist, um in den durch die Auftrennung gebildeten Spalt zwischen den beiden Anteilen der Decklagenschicht das Zwischenschichtmaterial einzubringen.

23. Vorrichtung nach einem der vorhergehenden Ansprüche 1 19-22, **dadurch gekennzeichnet, dass** zwischen der Verdichtungsvorrichtung und der Aufschäumvorrichtung eine erste Härtungszone zum Aushärten der verdichteten Decklagenschicht(en) angeordnet ist.

24. Vorrichtung nach einem der vorhergehenden Ansprüche 19-23, **dadurch gekennzeichnet, dass** in Förderrichtung hinter der Aufschäumvorrichtung eine zweite Härtungszone zum Aushärten der aufgeschäumten Zwischenschicht angeordnet ist.

## Claims

1. Method for manufacturing a sandwich plate, comprising the steps of:
a. providing an upper cover layer (11),
b. providing a lower cover layer (41),
c. providing an intermediate layer (31) arranged between the upper and lower cover layers,
d. the upper and lower cover layers being provided by scattering a particulate starting material and compressed by applying a contact pressure between two pressure plates arranged above and below the scattered material,
e. compressing the upper and lower cover layers,
f. foaming the intermediate layer,
**characterised in that**, before the intermediate layer is foamed, the upper and lower cover layers are compressed to a density of more than 500 kg/m³ bone dry, using a contact pressure higher than the pressure generated by foaming the intermediate layer.

2. Method according to any of preceding claims 1,
**characterised in that** the foaming process includes an expansion process.

3. Method according to any of the preceding claims, **characterised in that** the intermediate layer consists of a material foamable by thermal activation and is foamed by thermal activation.

4. Method according to any of the preceding claims,
**characterised in that** the heat required for the thermal activation of the intermediate layer is supplied during the compression of the upper and lower cover layers, in particular introduced using heated pressure plates.

5. Method according to any of the preceding claims,
**characterised in that** the upper and lower cover layers are compressed by arranging them between two pressure plates, in particular between two stationary pressure plates, and reducing the distance between the two pressure plates as the treatment process continues, in particular in the direction of advance of the upper and lower cover layers.

6. Method according to any of the preceding claims,
**characterised in that** the upper and lower cover layers are formed by scattering on a stratum of particulate starting material and subsequently splitting up the stratum, and the intermediate layer is formed by introducing particulate starting material into the gap produced by the splitting.

7. Method according to any of the preceding claims,
**characterised in that** the upper and lower cover layers are formed by scattering a particulate starting material onto a base layer and compressing the starting material, and the scattered material on the base layer is moved between two pressure plates, compressed between them, and subsequently divided up.

8. Method according to claim 7,
**characterised in that** the stratum is divided up into the upper and lower cover layers, and the intermediate layer introduced, after the upper and lower intermediate layers are compressed.

9. Method according to any of preceding claims 1-8,
**characterised in that** the intermediate layer is provided as a mixture of a substrate material and a foamable material.

10. Method according to claim 9,
**characterised in that** the substrate material is in the form of particles to which the foamable material is attached.

11. Method according to claim 9,
**characterised in that** the substrate material is in the form of a non-woven layer, to and/or into which the foamable material is attached or incorporated.

12. Wooden material plate of a sandwich construction, comprising
a. at least one upper cover layer,
b. at least one lower cover layer,
c. at least one foamed intermediate layer, which is arranged between the upper and lower cover layers and which has a lower density than the upper and lower cover layers and connects them,
d. **characterised in that** the upper and lower cover layers are highly compressed to a density of more than 500 kg/m³ bone dry, and are manufactured **in that** the upper and lower cover layers are provided by scattering a particulate starting material and compressed by applying a contact pressure between two pressure plates arranged above and below the scattered material.

13. Wooden material plate according to claim 12,
**characterised in that** a substrate material enclosed by a foamed material is contained in the intermediate layer.

14. Wooden material plate according to claim 12 or 13,
**characterised in that** the cover layers are compressed at a contact pressure higher than the pressure generated by foaming the intermediate layer

15. Wooden material plate according to any of preceding claims 12-14,
**characterised in that** the cover layers have a greater waviness on the side facing the intermediate layer than on the side facing away from the intermediate layer, in particular a waviness three times greater.

16. Wooden material plate according to any of preceding claims 12-15,
**characterised in that** the density ratio of the cover layer to the intermediate layer is greater than 5/3, preferably greater than 5/1.5.

17. Wooden material plate according to any of preceding claims 12-16,
**characterised in that** a microscopically gradual density transition is formed between the cover layer and the intermediate layer.

18. Wooden material plate according to any of preceding claims 12-17,
**characterised in that** the cover layers and/or the intermediate layer are composed of scattered starting material.

19. Device for manufacturing a lightweight sandwich plate, comprising
- a conveying device having an upper support surface which moves in a conveying direction,
- a first scattering device for scattering a particulate cover layer material for an upper cover layer and a lower cover layer,
- a second introduction device for introducing an intermediate layer material, in particular a second scattering device for scattering a particulate intermediate layer material,
- a compression device for compressing the cover layer material to a density of greater than 500 kg/m³ bone dry, and
- a foaming device for foaming the intermediate layer material to form a foamed intermediate layer arranged between the upper and lower cover layers,
**characterised in that** the foaming device is arranged downstream from the compression device in the conveying direction.

20. Device according to claim 19,
**characterised in that** the first scattering device comprises a first scattering device unit, which scatters a cover layer stratum onto the support surface of the conveying device and is arranged upstream from the second introduction device in the conveying direction, and comprises a second scattering device unit, which is arranged downstream from the second introduction device for the intermediate stratum in the conveying direction and scatters a particulate cover layer material onto the scattered intermediate layer.

21. Device according to claim 19,
**characterised in that** the second introduction device comprises a separating device, which is arranged between the first scattering device and the compression device in the conveying direction and which is formed to separate the cover layer stratum in a horizontal plane parallel to the conveying direction of the conveying device,
the second introduction device being formed to introduce the intermediate stratum material into the gap produced by the separating device between the parts of the cover layer material which are produced by the separation.

22. Device according to claim 19,
**characterised in that** the second introduction device comprises a separating device, which is arranged between the compression device and the foaming device in the conveying direction and which separates the compressed cover layer stratum in a horizontal plane parallel to the conveying direction, the second introduction device being formed to introduce the intermediate stratum material into the gap formed by the separation between the two portions of the cover layer stratum.

23. Device according to any of preceding claims 19-22,
**characterised in that** a first hardening zone for hardening the compressed cover layer stratum/strata is arranged between the compression device and the foaming device.

24. Device according to any of preceding claims 19-23,
**characterised in that** a second hardening zone for hardening the foamed intermediate layer is arranged downstream from the foaming device in the conveying direction.

## Revendications

1. Procédé servant à fabriquer un panneau en sandwich, avec les étapes suivantes :
a. la mise à disposition d'une strate de recouvrement (11) supérieure,
b. la mise à disposition d'une strate de recouvrement (41) inférieure,
c. la mise à disposition d'une strate intermédiaire (31) disposée entre les strates de recouvrement supérieure et inférieure,
d. dans lequel les strates de recouvrement supérieure et inférieure sont mises à disposition par la dispersion d'un matériau de départ sous forme de particules et sont compactées par l'application d'une pression de pressage entre deux panneaux de pression disposés au-dessus et au-dessous du matériau dispersé,
d. le compactage des strates de recouvrement supérieure et inférieure,
f. le moussage de la strate intermédiaire,
**caractérisé en ce que** les strates de recouvrement supérieure et inférieure sont compactées avant le moussage de la strate intermédiaire avec une pression de pressage à une densité supérieure à 500 Kg/m³ ATRO, laquelle pression de pressage est supérieure à la pression produite par le moussage de la strate intermédiaire.

2. Procédé selon la revendication 1,
**caractérisé en ce que** le processus de moussage comporte une opération d'expansion.

3. Procédé selon l'une quelconque des revendications précédentes,
**caractérisé en ce que** la strate intermédiaire est constituée d'un matériau pouvant être moussé par une activation thermique et est moussée par une activation thermique.

4. Procédé selon l'une quelconque des revendications précédentes,
**caractérisé en ce que** la chaleur requise pour l'activation thermique de la strate intermédiaire est amenée au cours de la compression des strates de recouvrement supérieure et inférieure, en particulier est introduite au moyen de panneaux de pression chauffés.

5. Procédé selon l'une quelconque des revendications précédentes,
**caractérisé en ce que** le compactage des strates de recouvrement supérieure et inférieure résulte de ce que ces dernières sont disposées entre deux panneaux de pression, en particulier sont introduites entre deux panneaux de pression immobiles, et l'espacement entre les deux panneaux de pression se réduit au fur et à mesure de l'avancée du processus de traitement, en particulier dans la direction d'avancement des strates de recouvrement supérieure et inférieure.

6. Procédé selon l'une quelconque des revendications précédentes,
**caractérisé en ce que** les strates de recouvrement supérieure et inférieure sont formées par le dépôt à la volée d'une couche d'un matériau de départ sous forme de particules puis par le dédoublement de l'une des couches, et la strate intermédiaire est formée par l'introduction d'un matériau de départ sous forme de particules dans la fente produite par le dédoublement.

7. Procédé selon l'une quelconque des revendications précédentes,
**caractérisé en ce que** les strates de recouvrement supérieure et inférieure sont formées par le dépôt à la volée d'un matériau de départ sous forme de particules sur une strate inférieure et par la compression du matériau de départ, et le matériau déposé à la volée sur la strate inférieure est déplacé entre deux panneaux de pressage, entre lesquels il est compressé puis est séparé.

8. Procédé selon la revendication 7,
**caractérisé en ce que** la séparation de la couche en les strates de recouvrement supérieure et inférieure et l'introduction de la strate intermédiaire ont lieu après la compression de la strate intermédiaire supérieure et de la strate intermédiaire inférieure.

9. Procédé selon l'une quelconque des revendications précédentes 1-8,
**caractérisé en ce que** la strate intermédiaire est mise à disposition sous la forme d'un mélange d'un matériau de support et d'un matériau pouvant être moussé.

10. Procédé selon la revendication 9,
**caractérisé en ce que** le matériau de support est présent sous la forme de particules, au niveau desquelles le matériau pouvant être moussé est fixé.

11. Procédé selon la revendication 9,
**caractérisé en ce que** le matériau de support est présent sous la forme d'une strate de non-tissé, au niveau de laquelle et/ou dans laquelle le matériau pouvant être moussé est fixé ou incorporé.

12. Panneau en un matériau dérivé du bois à structure en sandwich, comprenant :
a. au moins une strate de recouvrement supérieure,
b. au moins une strate de recouvrement inférieure,
c. au moins une strate intermédiaire moussée disposée entre les strates de recouvrement supérieure et inférieure, laquelle présente une densité inférieure à celle des strates de recouvrement supérieure et inférieure et qui relie ces dernières,
d. **caractérisé en ce que** les strates de recouvrement supérieure et inférieure ont été soumises à un compactage élevé à une densité supérieure à 500 Kg/m³ ATRO et sont fabriquées de telle façon que les strates de recouvrement supérieure et inférieure sont mises à disposition par la dispersion d'un matériau de départ sous forme de particules et sont compactées par l'application d'une pression de pressage entre deux panneaux de pression disposés au-dessus et au-dessous du matériau dispersé.

13. Panneau en un matériau dérivé du bois selon la revendication 12,
**caractérisé en ce qu'**un matériau de support entouré par un matériau moussé est contenu dans la strate intermédiaire.

14. Panneau en un matériau dérivé du bois selon la revendication 12 ou 13,
**caractérisé en ce que** les strates de recouvrement sont compactées à l'aide d'une pression de pressage, qui est plus élevée que la pression produite par le moussage de la strate intermédiaire.

15. Panneau en un matériau dérivé du bois selon l'une quelconque des revendications 12 - 14,
**caractérisé en ce que** les strates de recouvrement présentent, sur le côté pointant en direction de la strate intermédiaire, une ondulation plus importante que l'ondulation sur le côté opposé à la strate intermédiaire, en particulier une ondulation trois fois plus importante.

16. Panneau en un matériau dérivé du bois selon l'une quelconque des revendications 12 - 15,
**caractérisé en ce que** le rapport entre la densité de la strate de recouvrement et celle de la strate intermédiaire est supérieur à 5/3, de préférence supérieur à 5/1,5.

17. Panneau en un matériau dérivé du bois selon l'une quelconque des revendications 12 - 16,
**caractérisé en ce qu'**une transition de densité graduelle sur le plan microscopique est réalisée entre la strate de recouvrement et la strate intermédiaire.

18. Panneau en un matériau dérivé du bois selon l'une quelconque des revendications 12 - 17,
**caractérisé en ce que** les strates de recouvrement et/ou la strate intermédiaire sont composées d'un matériau de départ dispersé.

19. Dispositif servant à fabriquer un panneau en sandwich à construction légère, comprenant
- un dispositif de convoyage avec une surface d'appui supérieure, qui se déplace dans une direction de convoyage,
- un premier dispositif de dispersion servant à disperser un matériau de strate de recouvrement sous forme de particules pour une strate de recouvrement supérieure et pour une strate de recouvrement inférieure,
- un deuxième dispositif d'introduction servant à introduire un matériau de strate intermédiaire, en particulier un deuxième dispositif de dispersion servant à disperser un matériau de strate intermédiaire sous la forme de particules,
- un dispositif de compactage servant à compacter le matériau de strate de recouvrement à une densité supérieure à 500 Kg/m³ ATRO, et
- un dispositif de moussage servant à mousser le matériau de strate intermédiaire en une strate intermédiaire moussée disposée entre les strates de recouvrement supérieure et inférieure,
**caractérisé en ce que** le dispositif de moussage est disposé dans la direction de convoyage derrière le dispositif de compactage.

20. Dispositif selon la revendication 19,
**caractérisé en ce que** le premier dispositif de dispersion comprend une unité de dispositif de dispersion, qui disperse une couche de strate de recouvrement sur la surface d'appui du dispositif de convoyage et qui est disposée, dans la direction de convoyage, avant le deuxième dispositif d'introduction, et comprend une deuxième unité de dispositif de dispersion, qui est disposée, dans la direction de convoyage, derrière le deuxième dispositif d'introduction pour la couche intermédiaire et qui dépose à la volée un matériau de strate de recouvrement sous forme de particules sur la couche intermédiaire déposée à la volée.

21. Dispositif selon la revendication 19,
**caractérisé en ce que** le deuxième dispositif d'introduction comprend un dispositif de séparation, qui est disposé, dans la direction de convoyage, entre le premier dispositif de dispersion et le dispositif de compactage et qui est réalisé afin de séparer la couche de strate de recouvrement dans un plan horizontal et situé de manière parallèle par rapport à la direction de convoyage du dispositif de convoyage,
dans lequel le deuxième dispositif de convoyage est réalisé afin d'introduire le matériau de couche intermédiaire dans la fente produite par le dispositif de séparation entre les parties, produites par la séparation, du matériau de strate de recouvrement.

22. Dispositif selon la revendication 19,
**caractérisé en ce que** le deuxième dispositif d'introduction comprend un dispositif de séparation, qui est disposé, dans la direction de convoyage, entre le dispositif de compactage et le dispositif de moussage et qui sépare la couche de strate de recouvrement compactée dans un plan horizontal, situé de manière parallèle par rapport à la direction de convoyage, dans lequel le deuxième dispositif d'introduction est réalisé afin d'introduire, dans la fente formée par la séparation, entre les deux fractions de la couche de strate de recouvrement, le matériau de couche intermédiaire.

23. Dispositif selon l'une quelconque des revendications 19 - 22,
**caractérisé en ce qu'**une première zone de durcissement servant à faire durcir la/les couche(s) de strate de recouvrement est disposée entre le dispositif de compactage et le dispositif de moussage.

24. Dispositif selon l'une quelconque des revendications 19 - 23,
**caractérisé en ce qu'**une deuxième zone de durcissement servant à faire durcir la couche intermédiaire moussée est disposée, dans la direction de convoyage, derrière le dispositif de moussage.
